# EUROPEAN PATENT APPLICATION

(11) **EP 4 773 716 A2**
(43) Date of publication of application: **08.07.2026**
(21) Application number: 26179448.1
(22) Date of filing: 10.10.2022
(51) Int. Cl.: H04W 74/08

(54) **METHODS AND APPARATUS FOR SUPPORT OF MT-SDT CONSIDERING CU-DU SPLIT**

(30) Priority: 03.01.2022 KR 20220000378
(62) Divisional of application: 22200650.4
(71) Applicant: LG Electronics Inc., Yeongdeungpo-gu Seoul 07336 (KR)
(72) Inventor: KIM, Seokjung, 06772 Seoul (KR); BYUN, Daewook, 06772 Seoul (KR)
(74) Representative: Mooser, Sebastian Thomas

(57) **Abstract**

A method and apparatus for support of Mobile-Terminated Small Data Transmission (MT-SDT) considering Central Unit (CU)-Distributed Unit (DU) split is provided. A receiving gNB receives a Radio Access Network (RAN) paging message from a last serving gNB. The RAN paging message includes an MT-SDT indication informing that a MT- SDT is supported. The receiving gNB transmits a Retrieve UE Context Request message to the last serving gNB based on an Inactive Radio Network Temporary Identity (I-RNTI). The Retrieve UE Context Request message includes information about a Downlink (DL) Transport Network Layer (TNL) address associated with the MT-SDT. The receiving gNB receives DL data associated with the MT-SDT from the last serving gNB based on the DL TNL address, and transmits the DL data to the UE.

## Description

### TECHNICAL FIELD

The present disclosure relates to support of Mobile-Terminated Small Data Transmission (MT-SDT) considering Central Unit (CU)-Distributed Unit (DU) split.

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

The SDT in the 3GPP refers to data transmission in an inactive state. Specifically, the SDT is a transmission for a short data burst in a connectionless state where a device does not need to establish and teardown connections when small amounts of data need to be sent.

### SUMMARY

Mobile Originating (MO)-SDT for Uplink (UL) data to be transmitted by a User Equipment (UE) is being discussed first, and Mobile Terminated (MT)-SDT for Downlink (DL) data to be transmitted to the UE will be discussed later.

When a Next Generation Radio Access Network (NG-RAN) has DL data to be transmitted to the UE, a method of informing the UE that the MT-SDT is to be performed may be required based on the MO-SDT. In addition, when a Central Unit (CU) and a Distributed Unit (DU) are separated in the NG-RAN, or when a CU is additionally separated into Control Plane (CP) and User Plane (UP), a method of supporting MT-SDT may be required.

In an aspect, a method performed by a receiving gNB adapted to operate in a wireless communication system is provided. The method includes, receiving a Radio Access Network (RAN) paging message from a last serving gNB. The RAN paging message includes an MT-SDT indication informing that a Mobile Terminated (MT)-Small Data Transmission (SDT) is supported. The method includes, transmitting a Retrieve UE Context Request message to the last serving gNB based on an Inactive Radio Network Temporary Identity (I-RNTI). The Retrieve UE Context Request message includes information about a Downlink (DL) Transport Network Layer (TNL) address associated with the MT-SDT. The method includes, receiving DL data associated with the MT-SDT from the last serving gNB based on the DL TNL address, and transmitting the DL data to the UE.

In another aspect, a method performed by a User Equipment (UE) adapted to operate in a wireless communication system is provided. The method includes, receiving a paging message from a receiving gNB. The paging message is based on Mobile Terminated (MT)-Small Data Transmission (SDT). The method includes, receiving DL data associated with the MT-SDT from the receiving gNB.

In another aspect, an apparatus implementing the above method is provided.

The present disclosure may have various advantageous effects.

For example, when DL data is received for the UE in the RRC_INACTIVE state, the CU-CP can determine whether to attempt MT-SDT while maintaining the RRC_INACTIVE state for the UE or to transition the UE to the RRC_CONNECTED state.

For example, when MT-SDT is applicable, it is possible to prevent the UE from receiving DL data after unnecessarily transitioning to the RRC_CONNECTED state.

For example, when the UE accesses through a new gNB, the new gNB can quickly create a DL data forwarding tunnel, so that the DL data is quickly delivered through the MT-SDT.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 shows an example of an overall architecture of an NG-RAN to which implementations of the present disclosure is applied.
FIG. 6 shows an example of an overall architecture for separation of gNB-CU-CP and gNB-CU-UP to which implementations of the present disclosure is applied.
FIG. 7 shows an example of 5G system architecture to which implementations of the present disclosure is applied.
FIG. 8 shows an example of an SDT procedure to which implementations of the present disclosure is applied.
FIG. 9 shows an example of a method performed by a receiving gNB to which implementations of the present disclosure is applied.
FIG. 10 shows an example of a method performed by a UE to which implementations of the present disclosure is applied.
FIG. 11 shows an example of a procedure for informing a CU-UP of an MT-SDT support indication to which the first implementation of the present disclosure is applied.
FIGS. 12 and 13 show an example of a procedure for supporting MT-SDT in CU-DU split considering SDT without anchor relocation to which the first implementation of the present disclosure is applied.
FIG. 14 shows an example of a procedure for informing a CU-UP of an MT-SDT support indication to which the second implementation of the present disclosure is applied.
FIGS. 15 and 16 show an example of a procedure for supporting MT-SDT in CU-DU split considering SDT without anchor relocation to which the second implementation of the present disclosure is applied.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

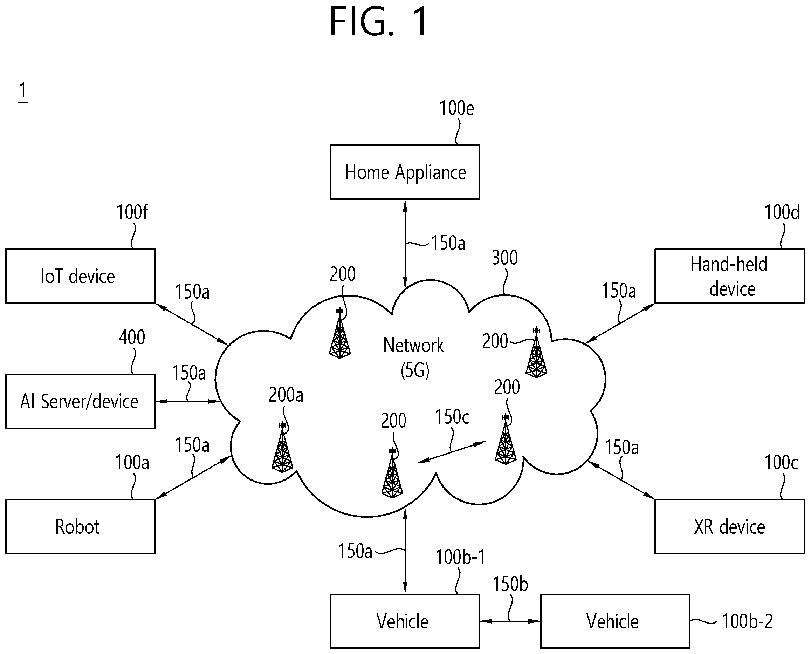

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

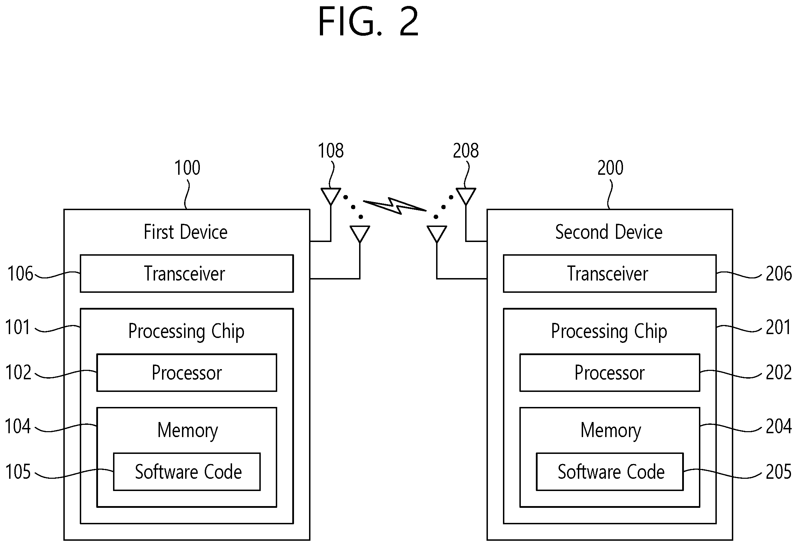

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be adapted to include the modules, procedures, or functions. Firmware or software adapted to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

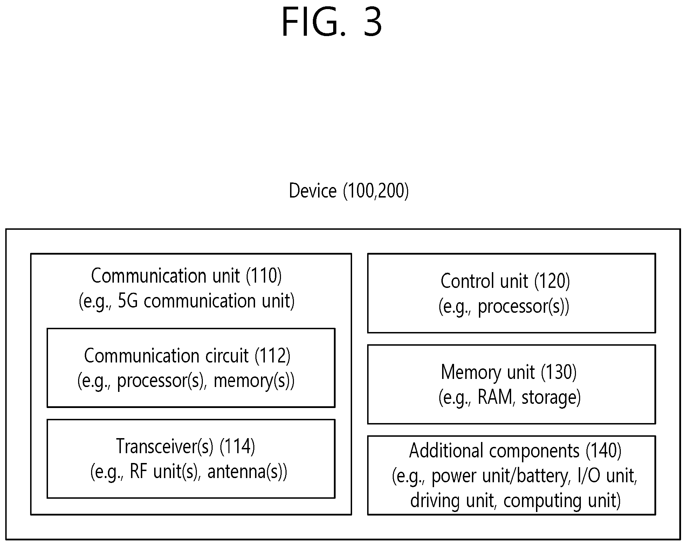

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

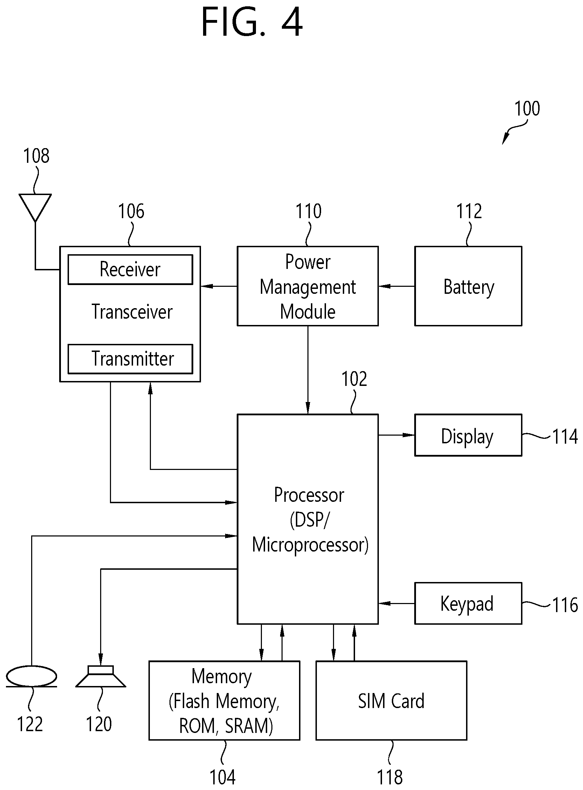

FIG. 4 shows an example of UE to which implementations of the present disclosure is applied.

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be com-municatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

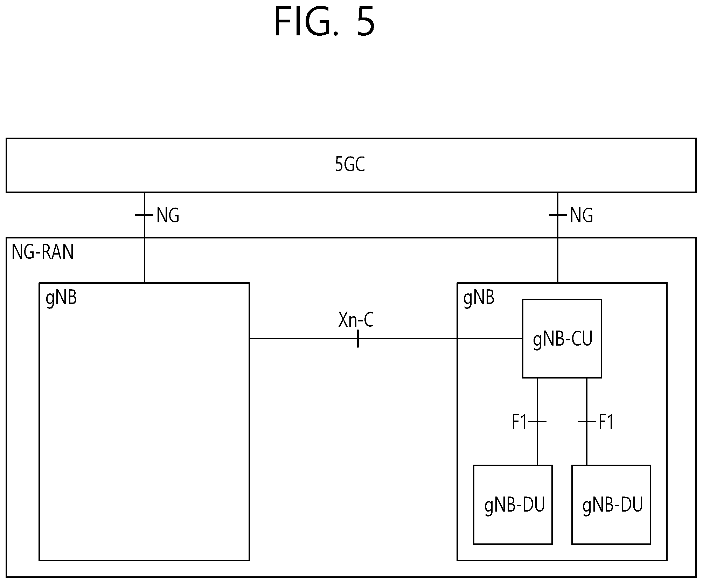

FIG. 5 shows an example of an overall architecture of an NG-RAN to which implementations of the present disclosure is applied.

Referring to FIG. 5, a Next Generation (NG)-Radio Access Network (RAN) consists of a set of gNBs connected to the 5GC through the NG interface. Alternatively, the NG-RAN may consist of a set of ng-eNBs, and the ng-eNB may consist of an ng-eNB-CU and one or more ng-eNB-DUs. The ng-eNB-CU and the ng-eNB-DU are connected through the W1 interface. The general principles for the overall architecture of the NG-RAN described below also apply to the ng-eNB and W1 interfaces, unless explicitly specified otherwise.

gNBs can be interconnected through the Xn interface.

A gNB may consist of a gNB Central Unit (gNB-CU) and one or more gNB Distributed Unit (gNB-DU). A gNB-CU and a gNB-DU is connected via F1 interface. For convenience of description, gNB-CU may be simply denoted as CU and gNB-DU as DU.

The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB-DU is a logical node hosting RLC, MAC and PHY layers of the gNB or en-gNB, and its operation is partly controlled by gNB-CU. One gNB-DU supports one or multiple cells. One cell is supported by only one gNB-DU. The gNB-DU terminates the F1 interface connected with the gNB-CU.

One gNB-DU may be connected to only one gNB-CU. Alternatively, for resiliency, a gNB-DU may be connected to multiple gNB-CUs by appropriate implementation.

NG, Xn and F1 are logical interfaces.

For NG-RAN, the NG and Xn-C interfaces for a gNB consisting of a gNB-CU and gNB-DUs, terminate in the gNB-CU. For E-UTRAN-NR Dual Connectivity (EN-DC), the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

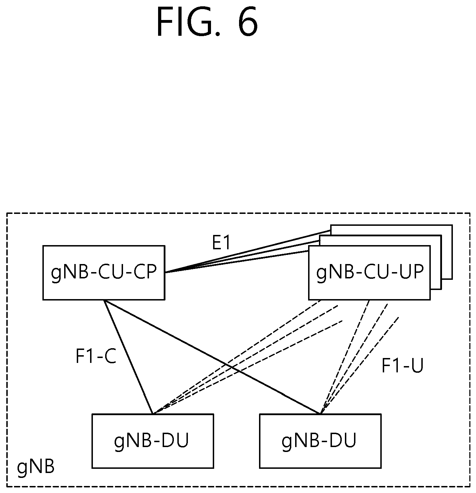

FIG. 6 shows an example of an overall architecture for separation of gNB-CU-CP and gNB-CU-UP to which implementations of the present disclosure is applied.

Referring to FIG. 6, a gNB may consist of a gNB-CU Control Plane (gNB-CU-CP), multiple gNB-CU User Planes (gNB-CU-UPs), and multiple gNB-DUs. For convenience of description, gNB-CU-CP may be simply denoted as CU-CP and gNB-CU-UP as CU-UP.

The gNB-CU-CP is a logical node hosting the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

The gNB-CU-UP is a logical node hosting the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-D.

The gNB-CU-CP is connected to the gNB-DU through the F1-C interface.

The gNB-CU-UP is connected to the gNB-DU through the F1-U interface.

The gNB-CU-UP is connected to the gNB-CU-CP through the E1 interface.

One gNB-DU is connected to only one gNB-CU-CP.

One gNB-CU-UP may be connected to only one gNB-CU-CP. Alternatively, for resiliency, a gNB-DU and/or a gNB-CU-UP may be connected to multiple gNB-CU-CPs by appropriate implementation.

One gNB-DU may be connected to multiple gNB-CU-UPs under the control of the same gNB-CU-CP.

One gNB-CU-UP may be connected to multiple DUs under the control of the same gNB-CU-CP;

The connectivity between a gNB-CU-UP and a gNB-DU may be established by the gNB-CU-CP using Bearer Context Management functions.

The gNB-CU-CP may select the appropriate gNB-CU-UP(s) for the requested services for the UE. In case of multiple CU-Ups, they belong to same security domain.

Data forwarding between gNB-CU-UPs during intra-gNB-CU-CP handover within a gNB may be supported by Xn-U.

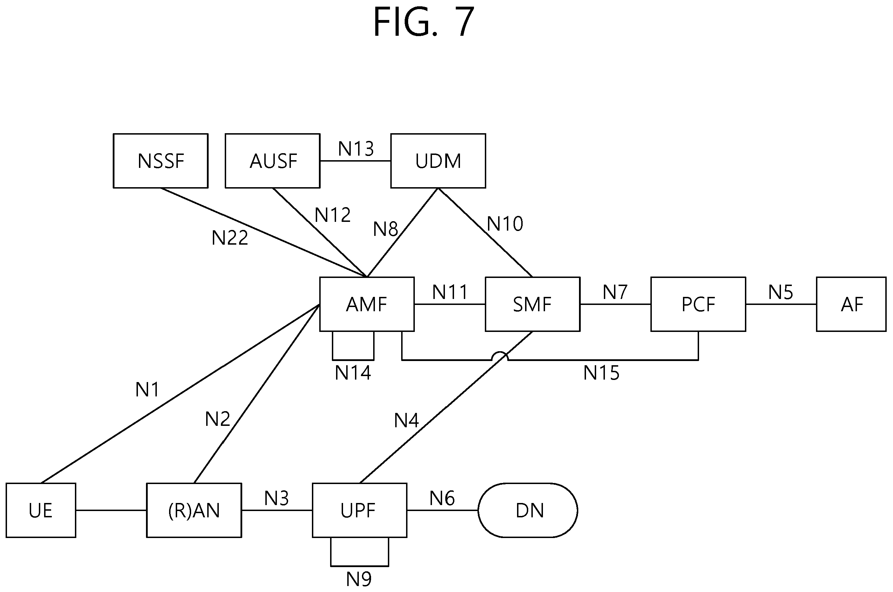

FIG. 7 shows an example of 5G system architecture to which implementations of the present disclosure is applied. The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 7 depicts the 5G system architecture in the non-roaming case, using the reference point representation showing how various network functions interact with each other.

In FIG. 7, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 7. For clarity, the NWDAF and its connections with other NFs, e.g., PCF, are not depicted in FIG. 7.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

An RRC state indicates whether an RRC layer of the UE is logically connected to an RRC layer of the network. In LTE/LTE-A, when the RRC connection is established between the RRC layer of the UE and the RRC layer of the E-UTRAN, the UE is in the RRC connected state (RRC_CONNECTED). Otherwise, the UE is in the RRC idle state (RRC_IDLE).

In NR, the RRC inactive state (RRC_INACTIVE) is additionally introduced. RRC_INACTIVE may be used for various purposes. For example, the massive machine type communications (MMTC) UEs can be efficiently managed in RRC_INACTIVE. When a specific condition is satisfied, transition is made from one of the above three states to the other.

A predetermined operation may be performed according to the RRC state. In RRC _IDLE, Public Land Mobile Network (PLMN) selection, broadcast of System Information (SI), cell re-selection mobility, Core Network (CN) paging and Discontinuous Reception (DRX) configured by Non-Access Stratum (NAS) may be performed. The UE shall have been allocated an Identifier (ID) which uniquely identifies the UE in a tracking area. No RRC context stored in the BS.

In RRC_CONNECTED, the UE has an RRC connection with the network (i.e., E-UTRAN/NG-RAN). Network-CN connection (both C/U-planes) is also established for UE. The UE AS context is stored in the network and the UE. The RAN knows the cell which the UE belongs to. The network can transmit and/or receive data to/from UE. Network controlled mobility including measurement is also performed.

Most of operations performed in RRC_IDLE may be performed in RRC _INACTIVE. But, instead of CN paging in RRC_IDLE, RAN paging is performed in RRC_INACTIVE. In other words, in RRC_IDLE, paging for Mobile Terminated (MT) data is initiated by core network and paging area is managed by core network. In RRC _INACTIVE, paging is initiated by NG-RAN, and RAN-based Notification Area (RNA) is managed by NG-RAN. Further, instead of DRX for CN paging configured by NAS in RRC _IDLE, DRX for RAN paging is configured by NG-RAN in RRC _INACTIVE. Meanwhile, in RRC_INACTIVE, 5GC-NG-RAN connection (both C/U-planes) is established for UE, and the UE AS context is stored in NG-RAN and the UE. NG-RAN knows the RNA which the UE belongs to.

Small Data Transmission (SDT) is described.

SDT is a procedure allowing data transmission while remaining in RRC_INACTIVE state (i.e., without transitioning to RRC_CONNECTED state). SDT may be enabled on a radio bearer basis and may be initiated by the UE only if i) less than a configured amount of UL data awaits transmission across all radio bearers for which SDT is enabled, ii) the DL Reference Signal Received Power (RSRP) is above a configured threshold, and iii) a valid SDT resource is available.

SDT procedure may be initiated with either a transmission over RACH (configured via system information) or over Type 1 Configured Gant (CG) resources (configured via dedicated signaling in RRC Release message). The SDT resources may be configured on initial Bandwidth Part (BWP) for both RACH and CG. RACH and CG resources for SDT may be configured on either or both of Normal UL (NUL) and Supplementary (SUL) carriers. For RACH, the network may configure 2-step and/or 4-step RA resources for SDT. When both 2-step and 4-step RA resources for SDT are configured, the UE may select the RA type. Contention-Free Random Access (CFRA) is not supported for SDT over RACH.

Once initiated, the SDT procedure may be terminated successfully after the UE is directed to RRC_IDLE or RRC_INACTIVE (e.g., via RRC Release message) or to RRC _CONNECTED (e.g., via RRC Resume message), or unsuccessfully upon cell re-selection, expiry of the SDT failure detection timer, an RLC entity reaching a configured maximum retransmission threshold. Upon failure of the SDT procedure, the UE may transition to RRC_IDLE.

After the initial Physical Uplink Shared Channel (PUSCH) transmission during the SDT procedure, subsequent transmissions may be handled differently depending on the type of resource used to initiate the SDT procedure.
- When using CG resources, the network may schedule subsequent UL transmissions using dynamic grants or they can take place on the following CG resource occasions. The DL transmissions may be scheduled using dynamic assignments. The UE may initiate subsequent UL transmission only after reception of confirmation for the initial PUSCH transmission from the network.
- When using RACH resources, the network may schedule subsequent UL and DL transmissions using dynamic UL grants and DL assignments, respectively, after the completion of the RA procedure.

SDT procedure over CG resources may only be initiated with valid UL timing alignment. The UL timing alignment may be maintained by the UE based on network configured SDT-specific timing alignment timer and DL RSRP of configured number of highest ranked Synchronization Signal Blocks (SSBs). Upon expiry of the SDT-specific timing alignment timer, the CG resources may be released.

Logical channel restrictions may be configured by the network for radio bearers enabled for SDT, and may be applied by the UE regardless of whether the SDT procedure is initiated with either a transmission over RACH or over Type 1 CG.

In 3GPP NR Rel-17, a discussion is underway to support Mobile Originating (MO)-SDT for UL data to be transmitted by the UE.

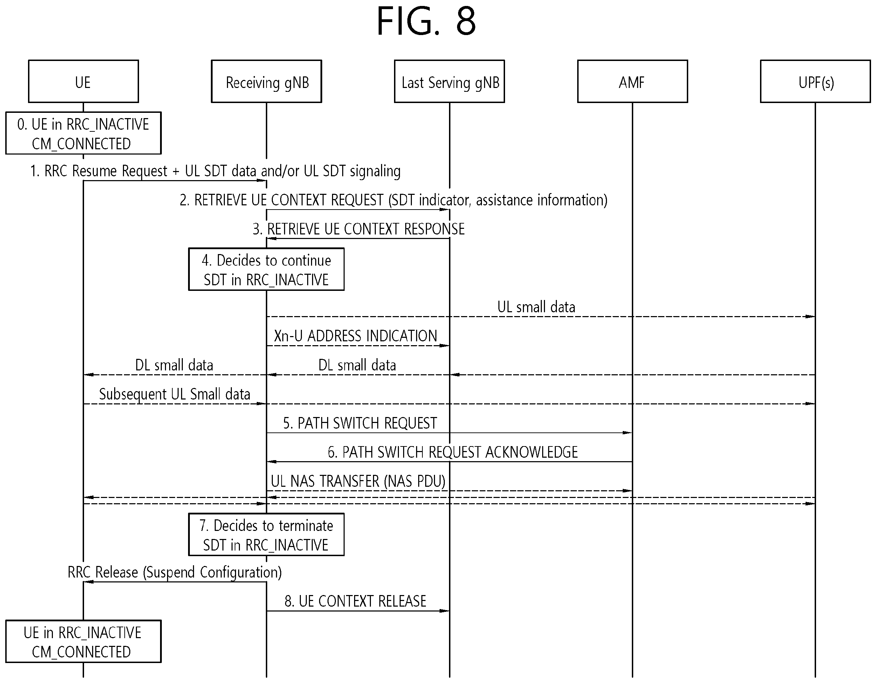

FIG. 8 shows an example of an SDT procedure to which implementations of the present disclosure is applied.

FIG. 8 illustrates an RA-based SDT procedure with UE context relocation. The operation of each step is described as follows.
1. The UE sends an RRC resume request (*RRCResumeRequest*) message as well as UL SDT data and/or UL SDT signaling to the receiving gNB.
2. The receiving gNB identifies the last serving gNB using the Inactive Radio Network Temporary Identity (I-RNTI) and retrieves the UE context by means of Xn-AP Retrieve UE Context procedure. The receiving gNB indicates that the UE request is for an SDT transaction and may also provide SDT assistance information (i.e., single packet, multiple packets).
3. The last serving gNB decides to relocate UE context for SDT and responds with the RETRIEVE UE CONTEXT RESPONSE message. The UL SDT data, if any, is delivered to the UPF.
4-6. The receiving gNB decides to keep UE in RRC inactive state for SDT. If loss of DL user data buffered in the last serving gNB shall be prevented, the receiving gNB provides forwarding addresses. The receiving gNB also initiates NG-AP Path Switch procedure to establish a NG UE associated signalling connection to the serving AMF. After path switch, the UL NAS PDU is delivered to AMF.
7. After the SDT transmission is completed, the receiving gNB generates and sends an RRC release (*RRCRelease*) message including the suspend indication to the UE to send the UE back to RRC_INACTIVE.
   In case DL non-SDT data or DL non-SDT signalling arrives, the receiving gNB may decide to directly send the UE to RRC _CONNECTED state by sending RRC resume (*RRCResume*) message.
8. The receiving gNB indicates the last serving gNB to remove the UE context by sending the XnAP UE CONTEXT RELEASE message. The XnAP UE CONTEXT RELEASE message may be sent after step 6.

Meanwhile, from 3GPP NR Rel-18, it was decided to support Mobile Terminated MT)-SDT for DL data to be transmitted to UE. More specifically, from 3GPP NR Rel-18, it was decided to support DL data transmission through paging-triggered SDT.

In order to support MT-SDT from 3GPP NR Rel-18, the gNB-CU-CP should be able to determine whether to transmit DL data through MT-SDT while maintaining the UE in the RRC_INACTIVE state or whether to transition the UE to the RRC _CONNECTED state. In order to determine this, the gNB-CU-CP needs to know the size of the DL data that has arrived at the gNB-CU-UP, but currently, the E1AP DL data notification message (DATA NOTIFICATION) transmitted by the gNB-CU-UP to the gNB-CU-CP does not include information about the size of DL data. Also, in the case of MO-SDT performed in 3GPP NR Rel-17, since MO-SDT was supported only for a specific bearer, similarly, it can be expected that MT-SDT is supported only for a specific bearer. Therefore, it may be necessary for the gNB-CU-UP to inform the gNB-CU-CP of the size of DL data for bearers that support MT-SDT, and not to inform of the size of DL data for bearers that do not support MT-SDT.

In addition, when the UE is connected to a new gNB other than the last serving gNB, in order to deliver DL data to the UE in RRC_INACTIVE state through MT-SDT, a tunnel for forwarding of DL data needs to be created between the new gNB and the last serving gNB. In order to create a tunnel for forwarding of DL data between the new gNB and the last serving gNB, the last serving gNB that receives the XnAP Retrieve UE Context Request (RETRIEVE UE CONTEXT REQUEST) message from the new gNB may additionally perform a partial UE context transfer procedure. In this process, it may take a long time until the DL data is transmitted through the MT-SDT.

Hereinafter, according to implementations of the present disclosure, a method of supporting the MT-SDT of the UE between a new NG-RAN and a last serving NG-RAN will be described. The new NG-RAN and the last serving NG-RAN may be replaced with the new gNB and the last serving gNB, respectively. Also, the new gNB may be replaced with the receiving gNB described in FIG. 8.

In the present disclosure to be described below, an existing RRC message may be used for an RRC message between the NG-RAN and the UE, or a new RRC message may be defined and used. An existing E1 message may be used for an E1 message between the gNB-CU-CP and the gNB-CU-UP, or a new E1 message may be defined and used. An existing F1 message may be used for an F1 message between the gNB-CU-CP and/or the gNB-CU-UP and the gNB-DU, or a new F1 message may be defined and used. An existing Xn message may be used for an Xn message between the gNB-CU of the receiving gNB and the gNB-CU of the last serving gNB, or a new Xn message may be defined and used.

In the present disclosure to be described below, some steps may be performed simultaneously and/or in parallel, or may be performed in a reversed order.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

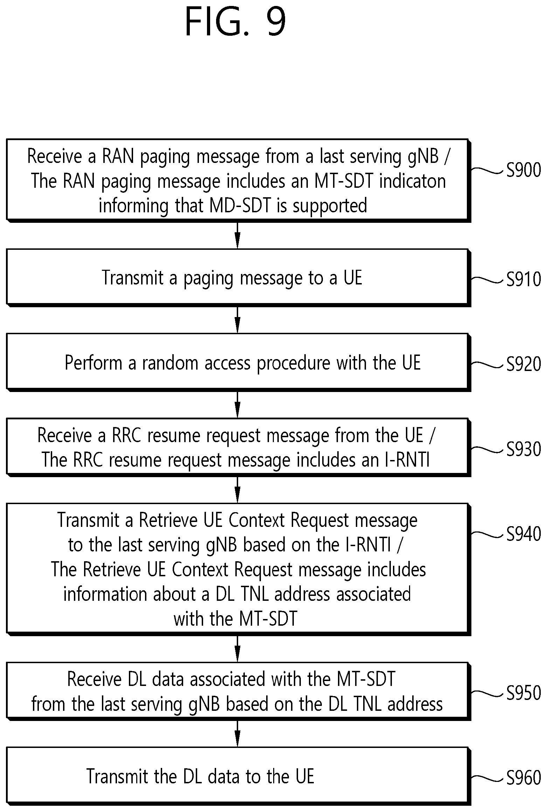

FIG. 9 shows an example of a method performed by a receiving gNB to which implementations of the present disclosure is applied.

In step S900, the method includes receiving a RAN paging message from a last serving gNB. The RAN paging message includes an MT-SDT indication informing that a MT- SDT is supported.

In step S910, the method includes transmitting a paging message to a UE.

In step S920, the method includes performing a random access procedure with the UE.

In step S930, the method includes receiving an RRC resume request message from the UE. The RRC resume request message includes an I-RNTI.

In step S940, the method includes transmitting a Retrieve UE Context Request message to the last serving gNB based on the I-RNTI. The Retrieve UE Context Request message includes information about a DL Transport Network Layer (TNL) address associated with the MT-SDT.

In step S950, the method includes receiving DL data associated with the MT-SDT from the last serving gNB based on the DL TNL address.

In step S960, the method includes transmitting the DL data to the UE.

In some implementations, the receiving gNB may include a gNB-CU and a gNB-DU, and the gNB-CU may include a gNB-CU-CP and a gNB-CU-UP. For example, the receiving gNB may consist of a gNB-CU and one or more gNB-DUs, and the gNB-CU may consist of a gNB-CU-CP and one or more gNB-CU-UPs.

In some implementations, when the receiving gNB includes a gNB-CU and a gNB-DU, and the gNB-CU includes a gNB-CU-CP and a gNB-CU-UP, the DL TNL address may be allocated by the gNB-DU and transmitted to the gNB-CU-CP. The DL TNL address may be transmitted to the gNB-CU-CP via an Initial UL RRC Message Transfer message. The Initial UL RRC Message Transfer message may include the RRC resume request message received from the UE. The Retrieve UE Context Request message including the DL TNL address may be transmitted by the gNB-CU-CP to the last serving gNB.

In some implementations, when the receiving gNB includes a gNB-CU and a gNB-DU, and the gNB-CU includes a gNB-CU-CP and a gNB-CU-UP, the RAN paging message including the MT-SDT indication may be received by the gNB-CU-CP from the last serving gNB. The MT-SDT indication may be transmitted from the gNB-CU-CP to the gNB-DU.

In some implementations, the MT-SDT indication may include a bearer ID associated with the MT-SDT.

Furthermore, the method in perspective of the receiving gNB described above in FIG. 9 may be performed by the second wireless device 200 shown in FIG. 2 and/or the wireless device 200 shown in FIG. 3.

More specifically, the receiving gNB comprises at least one transceiver, at least one processor, and at least one memory operably connectable to the at least one processor. The at least one memory stores instructions to cause the at least one processor to perform following operations. That is, the receiving gNB may perform the following operations.

The receiving gNB receives a RAN paging message from a last serving gNB. The RAN paging message includes an MT-SDT indication informing that a MT- SDT is supported.

The receiving gNB transmits a paging message to a UE.

The receiving gNB performs a random access procedure with the UE.

The receiving gNB receives an RRC resume request message from the UE. The RRC resume request message includes an I-RNTI.

The receiving gNB transmits a Retrieve UE Context Request message to the last serving gNB based on the I-RNTI. The Retrieve UE Context Request message includes information about a DL TNL address associated with the MT-SDT.

The receiving gNB receives DL data associated with the MT-SDT from the last serving gNB based on the DL TNL address.

The receiving gNB transmits the DL data to the UE.

In some implementations, the receiving gNB may include a gNB-CU and a gNB-DU, and the gNB-CU may include a gNB-CU-CP and a gNB-CU-UP. For example, the receiving gNB may consist of a gNB-CU and one or more gNB-DUs, and the gNB-CU may consist of a gNB-CU-CP and one or more gNB-CU-UPs.

In some implementations, when the receiving gNB includes a gNB-CU and a gNB-DU, and the gNB-CU includes a gNB-CU-CP and a gNB-CU-UP, the DL TNL address may be allocated by the gNB-DU and transmitted to the gNB-CU-CP. The DL TNL address may be transmitted to the gNB-CU-CP via an Initial UL RRC Message Transfer message. The Initial UL RRC Message Transfer message may include the RRC resume request message received from the UE. The Retrieve UE Context Request message including the DL TNL address may be transmitted by the gNB-CU-CP to the last serving gNB.

In some implementations, when the receiving gNB includes a gNB-CU and a gNB-DU, and the gNB-CU includes a gNB-CU-CP and a gNB-CU-UP, the RAN paging message including the MT-SDT indication may be received by the gNB-CU-CP from the last serving gNB. The MT-SDT indication may be transmitted from the gNB-CU-CP to the gNB-DU.

In some implementations, the MT-SDT indication may include a bearer ID associated with the MT-SDT.

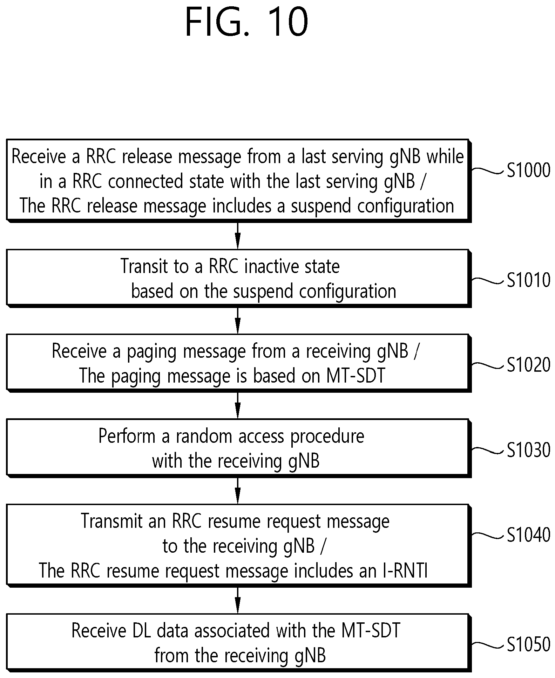

FIG. 10 shows an example of a method performed by a UE to which implementations of the present disclosure is applied.

In step S 1000, the method includes receiving an RRC release message from a last serving gNB while in an RRC connected state with the last serving gNB. The RRC release message includes a suspend configuration.

In step S1010, the method includes transitioning to an RRC inactive state based on the suspend configuration.

In step S1020, the method includes receiving a paging message from a receiving gNB. The paging message is based on MT- SDT.

In step S1030, the method includes performing a random access procedure with the receiving gNB.

In step S1040, the method includes transmitting an RRC resume request message to the receiving gNB. The RRC resume request message includes an I-RNTI.

In step S1050, the method includes receiving DL data associated with the MT-SDT from the receiving gNB.

In some implementations, the method may further include, after receiving the DL data associated with the MT-SDT, receiving a second RRC release message including a suspend configuration from the receiving gNB. Based on receiving the second RRC release message, the UE may not transition to the RRC connected state and remain in the RRC inactive state.

In some implementations, the RRC resume request message may include at least one of an RRC resume cause, an authentication token, and/or information related to the MT-SDT.

In some implementations, the method may further include, after receiving the DL data associated with the MT-SDT, transmitting UL data to the receiving gNB.

In some implementations, the receiving gNB may include a gNB-CU and a gNB-DU, and the gNB-CU may include a gNB-CU-CP and a gNB-CU-UP. For example, the receiving gNB may consist of a gNB-CU and one or more gNB-DUs, and the gNB-CU may consist of a gNB-CU-CP and one or more gNB-CU-UPs.

In some implementations, when the receiving gNB includes a gNB-CU and a gNB-DU, and the gNB-CU includes a gNB-CU-CP and a gNB-CU-UP, the paging message may be received from the gNB-DU of the receiving gNB. The random access procedure may be performed with the gNB-DU of the receiving gNB. The RRC resume request message may be transmitted to the gNB-DU of the receiving gNB. The DL data may be received from the gNB-DU of the receiving gNB.

In some implementations, the UE may communicate with at least one of a mobile device, a network and/or an autonomous vehicle other than the UE.

Furthermore, the method in perspective of the UE described above in FIG. 10 may be performed by the first wireless device 100 shown in FIG. 2, the wireless device 100 shown in FIG. 3, and/or the UE 100 shown in FIG. 4.

More specifically, the UE comprises at least one transceiver, at least one processor, and at least one memory operably connectable to the at least one processor. The at least one memory stores instructions to cause the at least one processor to perform following operations. That is, the UE may perform the following operations.

The UE receives an RRC release message from a last serving gNB while in an RRC connected state with the last serving gNB. The RRC release message includes a suspend configuration.

The UE transitions to an RRC inactive state based on the suspend configuration.

The UE receives a paging message from a receiving gNB. The paging message is based on MT- SDT.

The UE performs a random access procedure with the receiving gNB.

The UE transmit an RRC resume request message to the receiving gNB. The RRC resume request message includes an I-RNTI.

The UE receives DL data associated with the MT-SDT from the receiving gNB.

In some implementations, after receiving the DL data associated with the MT-SDT, the UE may receive a second RRC release message including a suspend configuration from the receiving gNB. Based on receiving the second RRC release message, the UE may not transition to the RRC connected state and remain in the RRC inactive state.

In some implementations, the RRC resume request message may include at least one of an RRC resume cause, an authentication token, and/or information related to the MT-SDT.

In some implementations, after receiving the DL data associated with the MT-SDT, the UE may transmit UL data to the receiving gNB.

In some implementations, the receiving gNB may include a gNB-CU and a gNB-DU, and the gNB-CU may include a gNB-CU-CP and a gNB-CU-UP. For example, the receiving gNB may consist of a gNB-CU and one or more gNB-DUs, and the gNB-CU may consist of a gNB-CU-CP and one or more gNB-CU-UPs.

In some implementations, when the receiving gNB includes a gNB-CU and a gNB-DU, and the gNB-CU includes a gNB-CU-CP and a gNB-CU-UP, the paging message may be received from the gNB-DU of the receiving gNB. The random access procedure may be performed with the gNB-DU of the receiving gNB. The RRC resume request message may be transmitted to the gNB-DU of the receiving gNB. The DL data may be received from the gNB-DU of the receiving gNB.

Furthermore, the method in perspective of the UE described above in FIG. 10 may be performed by control of the processor 102 included in the first wireless device 100 shown in FIG. 2, by control of the communication unit 110 and/or the control unit 120 included in the wireless device 100 shown in FIG. 3, and/or by control of the processor 102 included in the UE 100 shown in FIG. 4.

More specifically, a processing apparatus adapted to control a UE in a wireless communication system comprises at least one processor, and at least one memory operably connectable to the at least one processor. The at least one processor is adapted to perform following operations comprising: obtaining an RRC release message including a suspend configuration while in an RRC connected state with a last serving gNB, transitioning to an RRC inactive state based on the suspend configuration, obtaining a paging message based on MT- SDT, performing a random access procedure with a receiving gNB, generating an RRC resume request message including an I-RNTI, and obtaining DL data associated with the MT-SDT.

Furthermore, the method in perspective of the UE described above in FIG. 10 may be performed by a software code 105 stored in the memory 104 included in the first wireless device 100 shown in FIG. 2.

The technical features of the present disclosure may be embodied directly in hardware, in a software executed by a processor, or in a combination of the two. For example, a method performed by a wireless device in a wireless communication may be implemented in hardware, software, firmware, or any combination thereof. For example, a software may reside in RAM, flash memory, ROM, EPROM, EEPROM, registers, hard disk, a removable disk, a CD-ROM, or any other storage medium.

Some example of storage medium may be coupled to the processor such that the processor can read information from the storage medium. In the alternative, the storage medium may be integral to the processor. The processor and the storage medium may reside in an ASIC. For other example, the processor and the storage medium may reside as discrete components.

The computer-readable medium may include a tangible and non-transitory computer-readable storage medium.

For example, non-transitory computer-readable media may include RAM such as synchronous dynamic random access memory (SDRAM), ROM, non-volatile random access memory (NVRAM), EEPROM, flash memory, magnetic or optical data storage media, or any other medium that can be used to store instructions or data structures. Non-transitory computer-readable media may also include combinations of the above.

In addition, the method described herein may be realized at least in part by a computer-readable communication medium that carries or communicates code in the form of instructions or data structures and that can be accessed, read, and/or executed by a computer.

According to some implementations of the present disclosure, a non-transitory computer-readable medium (CRM) has stored thereon a plurality of instructions.

More specifically, CRM stores instructions to cause at least one processor to perform following operations comprising: obtaining an RRC release message including a suspend configuration while in an RRC connected state with a last serving gNB, transitioning to an RRC inactive state based on the suspend configuration, obtaining a paging message based on MT- SDT, performing a random access procedure with a receiving gNB, generating an RRC resume request message including an I-RNTI, and obtaining DL data associated with the MT-SDT.

Various implementations of the present disclosure are described below.

### 1. First implementation

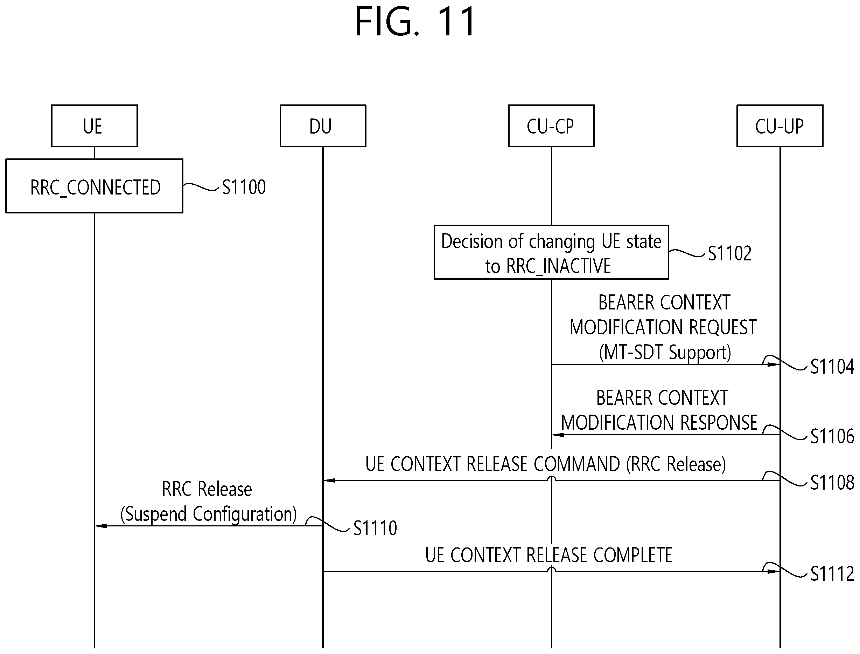

FIG. 11 shows an example of a procedure for informing a CU-UP of an MT-SDT support indication to which the first implementation of the present disclosure is applied.

FIG. 11 shows, in the process of the UE transitioning to the RRC_INACTIVE state, a method in which the CU-CP informs the CU-UP that the corresponding UE supports MT-SDT, and accordingly, when DL data is received through the bearer associated with the SDT afterwards, requests to inform the CU-CP of the size of the DL data.

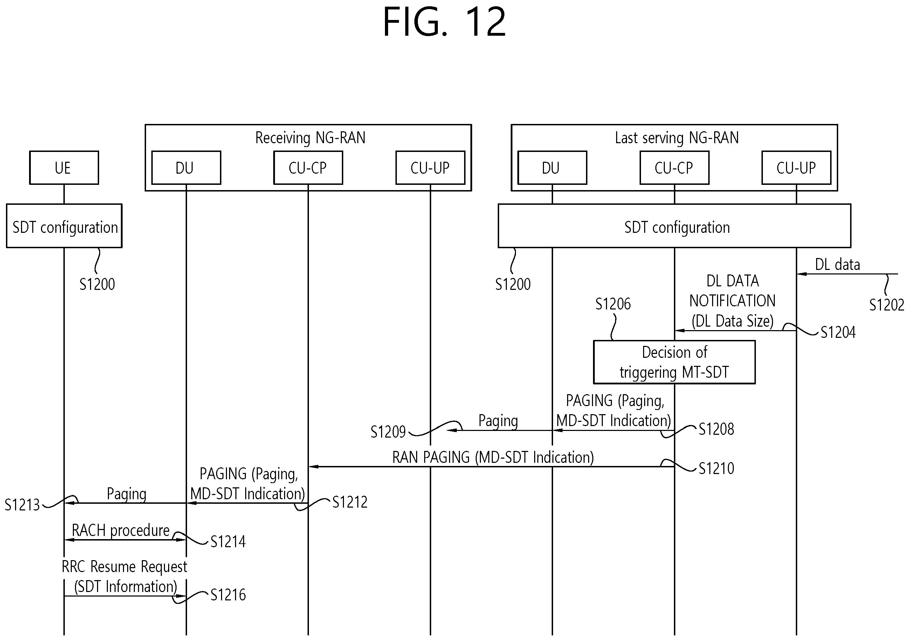

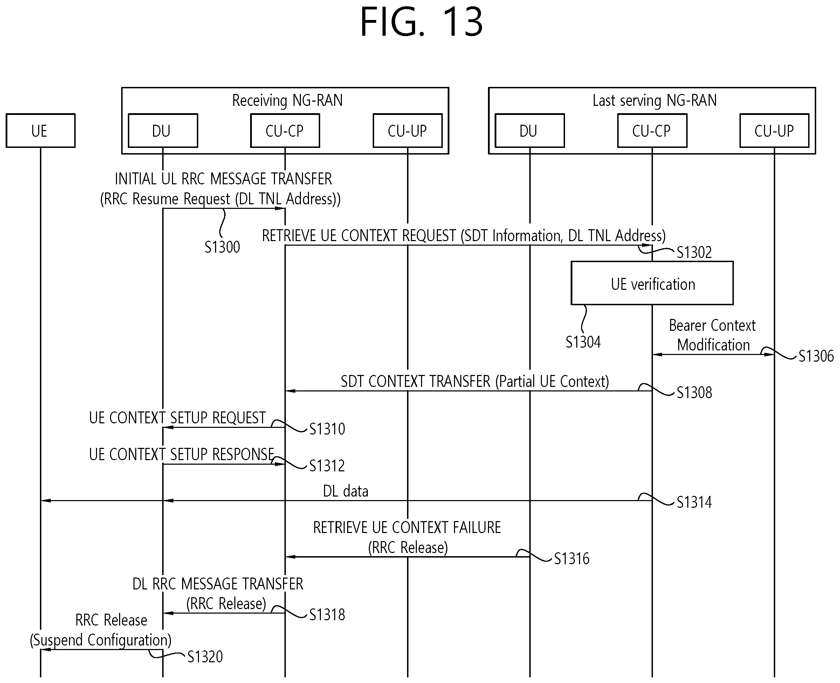

The procedure of FIG. 11 may be performed before the method described with reference to FIGS. 9 and/or 10 described above. Also, the procedure of FIG. 11 may be performed before the procedure of FIGS. 12 and 13 to be described later.
- Step S1100: The UE is currently in RRC_CONNECTED state.
- Step S1102: The CU-CP decides to transition the corresponding UE to the RRC_INACTIVE state. The transition to the RRC_INACTIVE state may be determined based on continued deactivation of the UE. Continued deactivation of the UE may be confirmed based on the CU-CP receiving a BEARER CONTEXT INACTIVITY NOTIFICATION message from the CU-UP.
- Step S1104: The CU-CP informs the CU-UP that the UE will transition to the RRC_INACTIVE state. Informing that the transition to the RRC_INACTIVE state will be made may be notified through a BEARER CONTEXT MODIFICATION REQUEST message.

In this case, the CU-CP may inform the CU-UP of the MT-SDT Support Indication together. Based on this, the CU-UP may know that the corresponding UE supports MT-SDT in the RRC_INACTIVE state, and therefore, when DL data is received from the UPF, that the size of the corresponding DL data should be informed to the CU-CP.

The CU-CP may inform the CU-UP of only the list of bearers to be used for MT-SDT instead of the MT-SDT Support Indication, and/or inform both of them. Therefore, when the CU-UP receives DL data from the UPF for the corresponding bearer, the CU-UP may inform the CU-CP of the size of the DL data as well.
- Step S1106: The CU-UP responds to the CU-CP through a BEARER CONTEXT MODIFICATION RESPONSE message. The CU-UP may continue to maintain a bearer context for the UE, UE-associated E1 connection, and/or NG-U related resources.
- Step S1108: The CU-CP generates an RRC release (*RRCRelease*) message including the Suspend Configuration to be used by the UE in the RRC_INACTIVE state and delivers it to the DU. The RRC release message including the Suspend Configuration may be delivered to the DU through a UE CONTEXT RELEASE COMMAND message.
- Step S1110: The DU delivers the RRC release message received from the CU-CP in step S1108 to the UE. Thereafter, the DU releases the UE context and/or related resources for the corresponding UE.

When the CG-SDT resource for the corresponding UE is allocated, the DU may keep the related information (e.g., CG-SDT related bearer ID, UL TNL address, CG-SDT configuration information, etc.) without releasing it. The DU may know this through a separate indicator notifying the CG-SDT, which is included in the UE CONTEXT RELEASE COMMAND message. Alternatively, when the CU-CP notifies the DU that MT-SDT is supported for the UE, the DU may keep the related information (e.g., information about bearer related to RA-SDT, information about bearer related to CG-SDT, etc.) without releasing it.
- Step S1112: The DU responds to the CU-CP with a UE CONTEXT RELEASE COMPLETE message.

FIGS. 12 and 13 show an example of a procedure for supporting MT-SDT in CU-DU split considering SDT without anchor relocation to which the first implementation of the present disclosure is applied.

FIGS. 12 and 13 shows, when DL data for a bearer related to MT-SDT arrives at the CU-UP of the last serving NG-RAN, a method in which the CU-UP of the last serving NG-RAN informs the CU-CP of the last serving NG-RAN of the size of DL data, so that the CU-CP of the last serving NG-RAN can determine whether to initiate MT-SDT for the UE. In addition, FIGS. 12 and 13 shows, by notifying the DU of the new NG-RAN (or the receiving NG-RAN) that MT-SDT is currently in progress, a method in which the DU of the receiving NG-RAN pre-allocates a DL TNL address from which the DU of the receiving NG-RAN can receive DL data forwarded from the CU-UP of the last serving NG-RAN when the UE starts the RRC resume procedure.

In FIGS. 12 and 13, it is assumed that the receiving NG-RAN and the last serving NG-RAN are separated into a CU-CP, a CU-UP, and a DU. However, this is only an example, and the first implementation of the present disclosure is applicable even when any one of the receiving NG-RAN and the last serving NG-RAN are not separated into CU-CP, CU-UP, and DU.

Some steps disclosed in FIGS. 12 and 13 may correspond to some steps in FIGS. 9 and/or 10 described above. In addition, the procedure of FIGS. 12 and 13 may be performed following the procedure of FIG. 11 described above.

First, the procedure of FIG. 12 will be described.
- Step S1200: The UE is currently in RRC_INACTIVE state. Therefore, the UE and the last serving NG-RAN each store the UE context. The NG-C connection between the CU-CP of the last serving NG-RAN and the AMF is maintained, and the NG-U connection between the CU-UP of the last serving NG-RAN and the UPF is also maintained.

In addition, it is assumed that the UE receives SDT-related configurations (e.g., bearer ID to be used for SDT, SDT data volume threshold, etc.) from the last serving NG-RAN in the process of transitioning to the RRC_INACTIVE state. Both CU-CP and CU-UP of the last serving NG-RAN maintain the corresponding information. If CG-SDT is configured for the UE, the UE, the CU-CP, the CU-UP, and the DU of the last serving NG-RAN all also have information related thereto.
- Step S1202: DL data from the UPF for the bearer associated with the MT-SDT arrives at the CU-UP of the last serving NG-RAN.
- Step S1204: The CU-UP of the last serving NG-RAN notifies the CU-CP of the last serving NG-RAN that DL data for the UE has arrived. Notifying that DL data for the corresponding UE has arrived may be notified through a DL data notification message. As described in FIG. 11, when the CU-UP of the last serving NG-RAN knows that the UE supports MT-SDT based on the MT-SDT Support Indication, the CU-UP of the last serving NG-RAN may notify by including the size of the received DL data.
- Step S1206: The CU-CP of the last serving NG-RAN determines whether to initiate MT-SDT for the UE by comparing the size of the DL data received in step S1204 with the SDT threshold for the UE.

The SDT threshold for determining whether to transmit DL data for the UE using the MT-SDT may be previously generated and stored by the CU-CP of the last serving NG-RAN when the corresponding UE is in the RRC_CONNECTED state. In addition, for this, the DU of the last serving NG-RAN may transmit a related value to the CU of the last serving NG-RAN in advance.

Alternatively, the DU of the last serving NG-RAN may generate an SDT threshold and deliver it to the CU-CP of the last serving NG-RAN, and the CU-CP of the last serving NG-RAN may continuously store it. In this case, the CU-CP of the last serving NG-RAN may request the DU of the last serving NG-RAN to generate an SDT threshold.
- Step S1208: The CU-CP of the last serving NG-RAN initiates a paging procedure to deliver DL data to the UE. When the size of the received DL data is smaller than the SDT threshold, the CU-CP of the last serving NG-RAN may include an MT-SDT Indication together in a paging message to be sent to the UE to initiate MT-SDT. In addition, the MT-SDT Indication may be delivered together in the F1 paging message transmitted to the DU of the last serving NG-RAN. Based on the MT-SDT Indication included in the F1 paging message, the DU of the last serving NG-RAN may know that MT-SDT has initiated for the UE.

The MT-SDT Indication may include bearer ID information to be used for MT-SDT.
- Step S1209: The DU of the last serving NG-RAN delivers the paging message included in the F1 PAGING message to the UE.

When the CG-SDT resource for the UE is configured, the CU-CP of the last serving NG-RAN may first attempt a paging procedure for a cell in the DU of the last serving NG-RAN to which the CG-SDT resource is allocated. In this way, it is possible to prevent unnecessary waste of paging-related resources.

However, if only the DU of the last serving NG-RAN knows the Timing Advance Timer (TAT) related to the CG-SDT resource, when the timer expires, the UE may no longer stay in a cell within the DU of the last serving NG-RAN. In this case, since paging-related resources may be wasted, the DU of the last serving NG-RAN may notify the CU-CP of the last serving NG-RAN when the timer related to the CG SDT resource expires. Through this, the CU-CP of the last serving NG-RAN may wait for a response from the UE by attempting a paging procedure in a wider range.
- Step S1210: The CU-CP of the last serving NG-RAN transmits a RAN paging message to the CU-CP of the NG-RAN located nearby to request paging for the corresponding UE. When it is decided to initiate MT-SDT for the corresponding UE in step S1206 described above, the RAN paging message may include the MT-SDT Indication. Through this, the CU-CP of the receiving NG-RAN may know that the corresponding UE supports MT-SDT. If the UE accesses the receiving NG-RAN in response to paging, the CU-CP of the receiving NG-RAN may know that DL TNL address information for receiving DL data forwarding should be included together in step S1302 of FIG. 13 to be described later.

Step S1208 and step S1210 may be performed simultaneously.
- Step S1212: The CU-CP of the receiving NG-RAN initiates a paging procedure. When the RAN paging message including the MT-SDT Indication is received in step S1210, the CU-CP of the receiving NG-RAN may include the MT-SDT Indication together in the F1 paging message transmitted to the DU of the receiving NG-RAN. Based on the MT-SDT Indication included in the F1 paging message, the DU of the receiving NG-RAN may know that MT-SDT has initiated for the UE.
- Step S1213: The DU of the receiving NG-RAN delivers the paging message included in the F1 PAGING message to the UE.
- Step S1214: When the UE stays under the receiving NG-RAN, the UE may know that the UE can receive DL data through MT-SDT currently based on the paging message received in step S1213. In response to step S1213, the UE starts the RACH procedure towards the DU of the receiving NG-RAN.

If the UE stays under the last serving NG-RAN, the UE may perform the RACH procedure of step S1214 in response to step S1209. In this case, the subsequent operations takes place for the last serving NG-RAN rather than the receiving NG-RAN, and steps S1302 and S1308 of FIG. 13 to be described later are omitted.
- Step S1216: The UE generates an RRC resume request message and transmits it to the DU of the receiving NG-RAN. The RRC resume request message may include an I-RNTI, an RRC resume cause, and/or an authentication token, etc. The resume cause may indicate that it is for SDT in the RRC_INACTIVE state. The authentication token may include, for example, a resume MAC-I. The RRC resume request message may include SDT-related information (e.g., whether UL data is present, whether a response to DL data is present, etc.).

Hereinafter, the procedure of FIG. 13 performed following the procedure of FIG. 12 will be described.
- Step S1300: The DU of the receiving NG-RAN transfers the RRC resume request message received from the UE to the CU-CP of the receiving NG-RAN. The RRC resume request message may be delivered through an Initial UL RRC Message Transfer message. In addition, in order receive the DL data being buffered in the CU-UP of the last serving NG-RAN to, the DU of the receiving NG-RAN may allocate a DL TNL address and include it in the Initial UL RRC Message Transfer message.
- Step S1302: The CU-CP of the receiving NG-RAN checks whether to find and resume the UE context that was in the suspended state within the CU-CP of the receiving NG-RAN based on the I-RNTI, and/or whether the UE can be authenticated through an authentication token, etc. If the CU-CP of the receiving NG-RAN does not find the UE context for the UE, the CU-CP of the receiving NG-RAN requests the UE context from the CU-CP of the last serving NG-RAN based on the I-RNTI. Requesting the UE context may be requested through a Retrieve UE Context Request message. At this time, the DL TNL address received from the DU of the receiving NG-RAN in step S1300 is transmitted together to the CU-CP of the last serving NG-RAN.
- Step S1304: The CU-CP of the last serving NG-RAN checks whether to find and resume the UE context that was in the suspended state within the CU-CP of the last serving NG-RAN based on the I-RNTI, and/or whether the UE can be authenticated through an authentication token, etc. It also determines whether to deliver the UE context to the receiving NG-RAN.
- Step S1306: If the UE context can be found based on the I-RNTI in step S1304, through the bearer context modification procedure, the CU-CP of the last serving NG-RAN may inform the CU-UP of the last serving NG-RAN that the UE is still in the RRC_INACTIVE state, but the DL data currently being buffered will be delivered through the MT-SDT. In this case, the DL TNL address to the DU of the receiving NG-RAN received in step S1302 may be notified to the CU-UP of the last serving NG-RAN.
- Step S1308: When the CU-CP of the last serving NG-RAN decides to transmit DL data to the UE through MT-SDT while maintaining the UE context, the CU-CP of the last serving NG-RAN may respond to the CU-CP of the receiving NG-RAN through an SDT CONTEXT TRANSFER message. The SDT CONTEXT TRANSFER message may include a partial UE context to be used in MT-SDT (e.g., a bearer ID to be used for SDT, RLC bearer configuration to be used in the corresponding bearer, etc.).
- Step S1310: The CU-CP of the receiving NG-RAN requests the DU of the receiving NG-RAN to create a UE context based on the information received in step S1308. Requesting the UE context creation may be requested through a UE CONTEXT SETUP REQUEST message.
- Step S1312: The DU of the receiving NG-RAN responds to the CU-CP of the receiving NG-RAN through a UE CONTEXT SETUP RESPONSE message.
- Step S1314: The CU-UP of the last serving NG-RAN delivers the currently buffered DL data to the UE through the DU of the receiving NG-RAN. If the UE has UL data to be sent to 5GC, it may be transmitted to the 5GC through the DU of the receiving NG-RAN and the CU-UP of the last serving NG-RAN in this step.
- Step S1316: If the CU-CP of the last serving NG-RAN determines that there is no more data to be exchanged with the UE, the CU-CP of the last serving NG-RAN decides to transition the UE back to the RRC_INACTIVE state. Therefore, the CU-CP of the last serving NG-RAN generates an RRC release message including the Suspend Configuration to be used by the UE in the RRC_INACTIVE state and delivers it to the CU-CP of the receiving NG-RAN. The RRC release message including the Suspend Configuration may be delivered through a RETRIEVE UE CONTEXT FAILURE message. Through this, the CU-CP of the receiving NG-RAN may know that the MT-SDT for the corresponding UE is terminated.
- Step S1318: The CU-CP of the receiving NG-RAN transfers the RRC release message received in step S1316 to the DU of the receiving NG-RAN. The RRC release message may be delivered through a DL RRC MESSAGE TRANSFER message or a UE CONTEXT RELEASE COMMAND message.
- Step S1320: The DU of the receiving NG-RAN delivers the RRC release message received from the CU-CP of the receiving NG-RAN in step S1318 to the UE. Thereafter, the DU of the receiving NG-RAN releases the UE context and related resources for the corresponding UE.

When the RRC release message is received through the UE CONTEXT RELEASE COMMAND message in step S1318, the DU of the receiving NG-RAN responds to the CU-CP of the receiving NG-RAN with a UE CONTEXT RELEASE COMPLETE message.

### 2. Second implementation

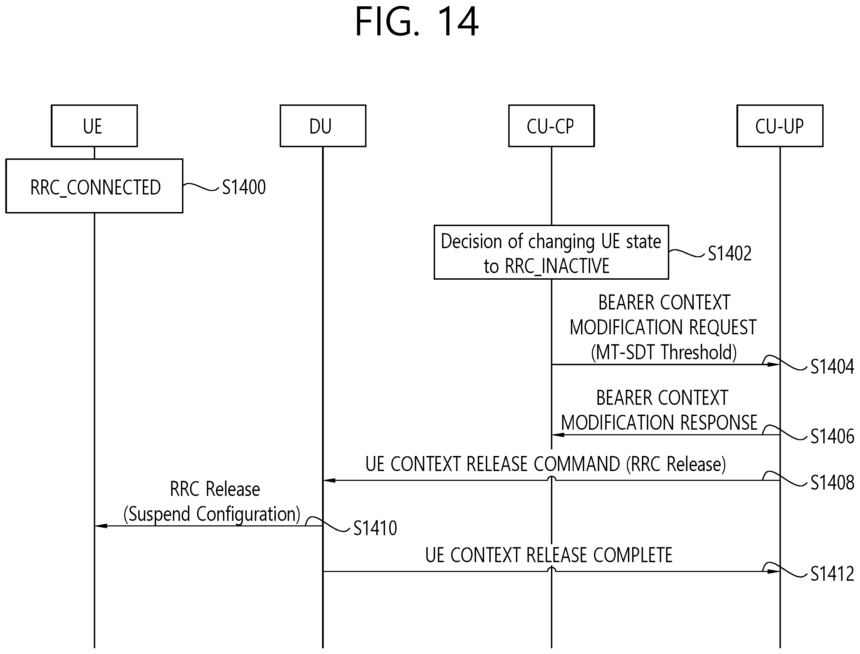

FIG. 14 shows an example of a procedure for informing a CU-UP of an MT-SDT support indication to which the second implementation of the present disclosure is applied.

FIG. 14 shows, in the process of the UE transitioning to the RRC_INACTIVE state, a method in which the CU-CP transmits the SDT threshold to the CU-UP in advance to inform that the UE supports MT-SDT, and accordingly, when DL data is received through the bearer associated with the SDT afterwards, requests to inform the CU-CP by comparing the size of DL data and the SDT threshold.

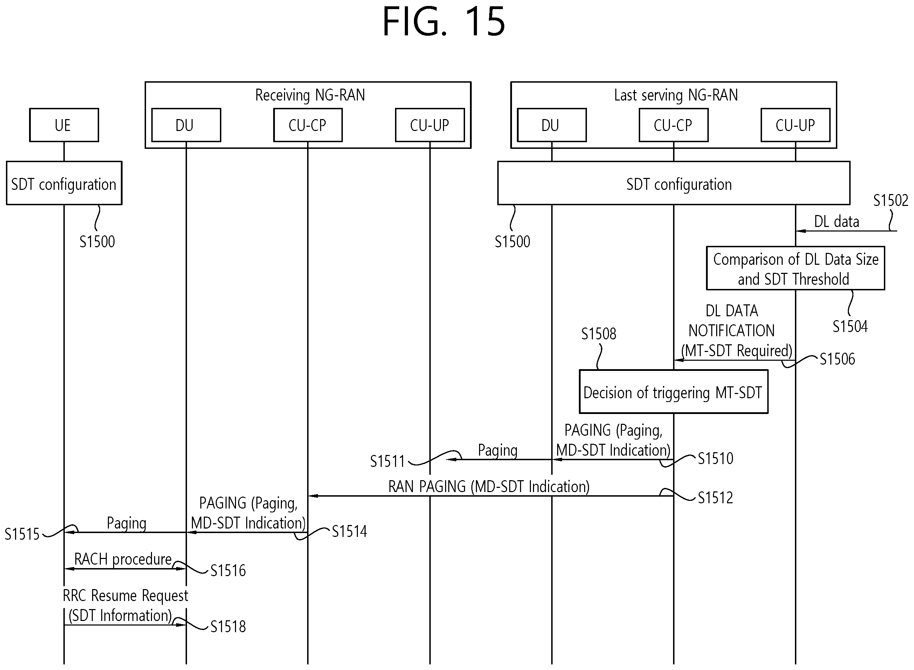

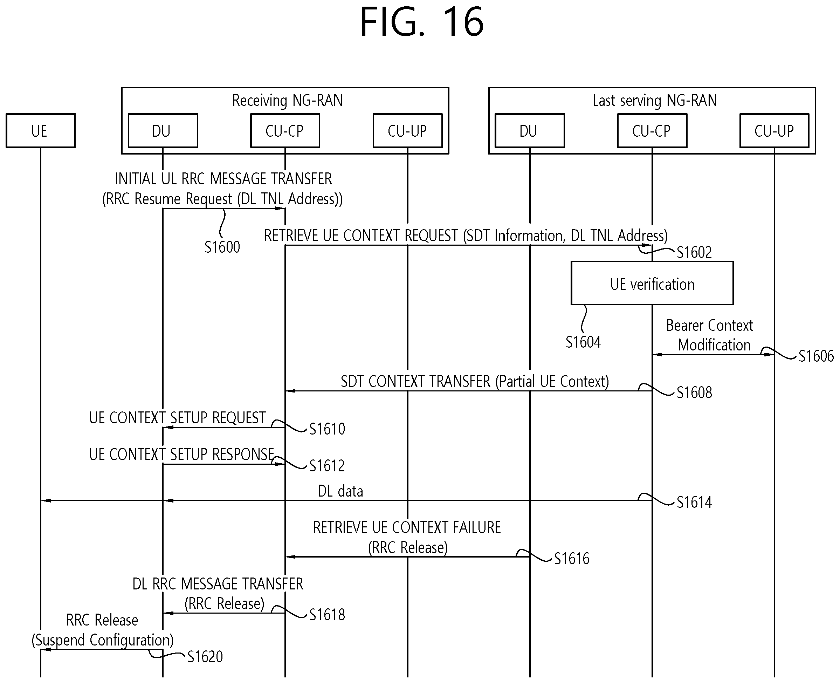

The procedure of FIG. 14 may be performed before the method described with reference to FIGS. 9 and/or 10 described above. Also, the procedure of FIG. 14 may be performed before the procedure of FIGS. 15 and 16 to be described later.
- Step S1400: The UE is currently in RRC_CONNECTED state.
- Step S1402: The CU-CP decides to transition the corresponding UE to the RRC_INACTIVE state. The transition to the RRC_INACTIVE state may be determined based on continued deactivation of the UE. Continued deactivation of the UE may be confirmed based on the CU-CP receiving a BEARER CONTEXT INACTIVITY NOTIFICATION message from the CU-UP.
- Step S1404: The CU-CP informs the CU-UP that the UE will transition to the RRC_INACTIVE state. Informing that the transition to the RRC_INACTIVE state will be made may be notified through a BEARER CONTEXT MODIFICATION REQUEST message.

In this case, the CU-CP may inform the CU-UP of the SDT threshold together. Based on this, the CU-UP may know that the corresponding UE supports MT-SDT in the RRC_INACTIVE state, and when DL data is received from the UPF, as shown in FIG. 15 which will be described later, that the CU-UP should compare the size of the corresponding DL data and the SDT threshold for the corresponding UE and inform the result to the CU-CP.

The SDT threshold for determining whether to transmit DL data for the UE using the MT-SDT may be previously generated and stored by the CU-CP of the last serving NG-RAN when the corresponding UE is in the RRC_CONNECTED state. In addition, for this, the DU of the last serving NG-RAN may transmit a related value to the CU of the last serving NG-RAN in advance.

Alternatively, the DU of the last serving NG-RAN may generate an SDT threshold and deliver it to the CU-CP of the last serving NG-RAN, and the CU-CP of the last serving NG-RAN may continuously store it. In this case, the CU-CP of the last serving NG-RAN may request the DU of the last serving NG-RAN to generate an SDT threshold.

The CU-CP may inform the CU-UP of the list of bearers to be used for MT-SDT. Therefore, when the CU-UP receives DL data from the UPF for the corresponding bearer, the CU-UP may inform the CU-CP of the size of the DL data as well.
- Step S1406: The CU-UP responds to the CU-CP through a BEARER CONTEXT MODIFICATION RESPONSE message. The CU-UP may continue to maintain a bearer context for the UE, UE-associated E1 connection, and/or NG-U related resources.
- Step S1408: The CU-CP generates an RRC release message including the Suspend Configuration to be used by the UE in the RRC_INACTIVE state and delivers it to the DU. The RRC release message including the Suspend Configuration may be delivered to the DU through a UE CONTEXT RELEASE COMMAND message.
- Step S1410: The DU delivers the RRC release message received from the CU-CP in step S1408 to the UE. Thereafter, the DU releases the UE context and/or related resources for the corresponding UE.

When the CG-SDT resource for the corresponding UE is allocated, the DU may keep the related information (e.g., CG-SDT related bearer ID, UL TNL address, CG-SDT configuration information, etc.) without releasing it. The DU may know this through a separate indicator notifying the CG-SDT, which is included in the UE CONTEXT RELEASE COMMAND message. Alternatively, when the CU-CP notifies the DU that MT-SDT is supported for the UE, the DU may keep the related information (e.g., information about bearer related to RA-SDT, information about bearer related to CG-SDT, etc.) without releasing it.
- Step S1412: The DU responds to the CU-CP with a UE CONTEXT RELEASE COMPLETE message.

FIGS. 15 and 16 show an example of a procedure for supporting MT-SDT in CU-DU split considering SDT without anchor relocation to which the second implementation of the present disclosure is applied.

FIGS. 15 and 16 shows, when DL data for a bearer related to MT-SDT arrives at the CU-UP of the last serving NG-RAN, a method in which the CU-UP of the last serving NG-RAN compares the size of DL data with the SDT threshold and informs the CU-CP of the last serving NG-RAN of the result, so that the CU-CP of the last serving NG-RAN can determine whether to initiate MT-SDT for the UE. In addition, FIGS. 15 and 16 shows, by notifying the DU of the new NG-RAN (or the receiving NG-RAN) that MT-SDT is currently in progress, a method in which the DU of the receiving NG-RAN pre-allocates a DL TNL address from which the DU of the receiving NG-RAN can receive DL data forwarded from the CU-UP of the last serving NG-RAN when the UE starts the RRC resume procedure.

In FIGS. 15 and 16, it is assumed that the receiving NG-RAN and the last serving NG-RAN are separated into a CU-CP, a CU-UP, and a DU. However, this is only an example, and the second implementation of the present disclosure is applicable even when any one of the receiving NG-RAN and the last serving NG-RAN are not separated into CU-CP, CU-UP, and DU.

Some steps disclosed in FIGS. 15 and 16 may correspond to some steps in FIGS. 9 and/or 10 described above. In addition, the procedure of FIGS. 15 and 16 may be performed following the procedure of FIG. 14 described above.

First, the procedure of FIG. 15 will be described.
- Step S1500: The UE is currently in RRC_INACTIVE state. Therefore, the UE and the last serving NG-RAN each store the UE context. The NG-C connection between the CU-CP of the last serving NG-RAN and the AMF is maintained, and the NG-U connection between the CU-UP of the last serving NG-RAN and the UPF is also maintained.

In addition, it is assumed that the UE receives SDT-related configurations (e.g., bearer ID to be used for SDT, SDT data volume threshold, etc.) from the last serving NG-RAN in the process of transitioning to the RRC_INACTIVE state. Both CU-CP and CU-UP of the last serving NG-RAN maintain the corresponding information. If CG-SDT is configured for the UE, the UE, the CU-CP, the CU-UP, and the DU of the last serving NG-RAN all also have information related thereto.
- Step S1502: DL data from the UPF for the bearer associated with the MT-SDT arrives at the CU-UP of the last serving NG-RAN.
- Step S1504: When the CU-UP of the last serving NG-RAN receives the SDT threshold from the CU-CP of the last serving NG-RAN in step S1404 of FIG. 14, the CU-UP of the last serving NG-RAN compares the size of the DL data received from the UPF and the SDT threshold for the corresponding UE.
- Step S1506: The CU-UP of the last serving NG-RAN notifies the CU-CP of the last serving NG-RAN that DL data for the UE has arrived. Notifying that DL data for the corresponding UE has arrived may be notified through a DL data notification message.

The CU-UP of the last serving NG-RAN may inform the CU-CP of the last serving NG-RAN of the comparison result of the size of the received DL data and the SDT threshold derived in step S1504 together. When the size of the received DL data is smaller than the SDT threshold, the CU-UP of the last serving NG-RAN may transmit an MT-SDT Required Indication to inform the CU-CP of the last serving NG-RAN that MT-SDT is required for the corresponding UE. The bearer ID to which the DL data has arrived may be transmitted together with the MT-SDT Required Indication.
- Step S1508: The CU-CP of the last serving NG-RAN determines whether to initiate MT-SDT for the UE based on the MT-SDT Required Indication received in step S1506.
- Step S1510: The CU-CP of the last serving NG-RAN initiates a paging procedure to deliver DL data to the UE. When the size of the received DL data is smaller than the SDT threshold, the CU-CP of the last serving NG-RAN may include an MT-SDT Indication together in a paging message to be sent to the UE to initiate MT-SDT. In addition, the MT-SDT Indication may be delivered together in the F1 paging message transmitted to the DU of the last serving NG-RAN. Based on the MT-SDT Indication included in the F1 paging message, the DU of the last serving NG-RAN may know that MT-SDT has initiated for the UE.

The MT-SDT Indication may include bearer ID information to be used for MT-SDT.
- Step S1511: The DU of the last serving NG-RAN delivers the paging message included in the F1 PAGING message to the UE.

When the CG-SDT resource for the UE is configured, the CU-CP of the last serving NG-RAN may first attempt a paging procedure for a cell in the DU of the last serving NG-RAN to which the CG-SDT resource is allocated. In this way, it is possible to prevent unnecessary waste of paging-related resources.

However, if only the DU of the last serving NG-RAN knows the TAT related to the CG-SDT resource, when the timer expires, the UE may no longer stay in a cell within the DU of the last serving NG-RAN. In this case, since paging-related resources may be wasted, the DU of the last serving NG-RAN may notify the CU-CP of the last serving NG-RAN when the timer related to the CG SDT resource expires. Through this, the CU-CP of the last serving NG-RAN may wait for a response from the UE by attempting a paging procedure in a wider range.
- Step S1512: The CU-CP of the last serving NG-RAN transmits a RAN paging message to the CU-CP of the NG-RAN located nearby to request paging for the corresponding UE. When it is decided to initiate MT-SDT for the corresponding UE in step S1508 described above, the RAN paging message may include the MT-SDT Indication. Through this, the CU-CP of the receiving NG-RAN may know that the corresponding UE supports MT-SDT. If the UE accesses the receiving NG-RAN in response to paging, the CU-CP of the receiving NG-RAN may know that DL TNL address information for receiving DL data forwarding should be included together in step S1602 of FIG. 16 to be described later.

Step S1510 and step S1512 may be performed simultaneously.
- Step S1514: The CU-CP of the receiving NG-RAN initiates a paging procedure. When the RAN paging message including the MT-SDT Indication is received in step S1512, the CU-CP of the receiving NG-RAN may include the MT-SDT Indication together in the F1 paging message transmitted to the DU of the receiving NG-RAN. Based on the MT-SDT Indication included in the F1 paging message, the DU of the receiving NG-RAN may know that MT-SDT has initiated for the UE.
- Step S1515: The DU of the receiving NG-RAN delivers the paging message included in the F1 PAGING message to the UE.
- Step S1516: When the UE stays under the receiving NG-RAN, the UE may know that the UE can receive DL data through MT-SDT currently based on the paging message received in step S1515. In response to step S1515, the UE starts the RACH procedure towards the DU of the receiving NG-RAN.

If the UE stays under the last serving NG-RAN, the UE may perform the RACH procedure of step S1516 in response to step S1511. In this case, the subsequent operations takes place for the last serving NG-RAN rather than the receiving NG-RAN, and steps S1602 and S1608 of FIG. 16 to be described later are omitted.
- Step S1518: The UE generates an RRC resume request message and transmits it to the DU of the receiving NG-RAN. The RRC resume request message may include an I-RNTI, an RRC resume cause, and/or an authentication token, etc. The resume cause may indicate that it is for SDT in the RRC_INACTIVE state. The authentication token may include, for example, a resume MAC-I. The RRC resume request message may include SDT-related information (e.g., whether UL data is present, whether a response to DL data is present, etc.).

Hereinafter, the procedure of FIG. 16 performed following the procedure of FIG. 15 will be described.
- Step S1600: The DU of the receiving NG-RAN transfers the RRC resume request message received from the UE to the CU-CP of the receiving NG-RAN. The RRC resume request message may be delivered through an Initial UL RRC Message Transfer message. In addition, in order receive the DL data being buffered in the CU-UP of the last serving NG-RAN to, the DU of the receiving NG-RAN may allocate a DL TNL address and include it in the Initial UL RRC Message Transfer message.
- Step S1602: The CU-CP of the receiving NG-RAN checks whether to find and resume the UE context that was in the suspended state within the CU-CP of the receiving NG-RAN based on the I-RNTI, and/or whether the UE can be authenticated through an authentication token, etc. If the CU-CP of the receiving NG-RAN does not find the UE context for the UE, the CU-CP of the receiving NG-RAN requests the UE context from the CU-CP of the last serving NG-RAN based on the I-RNTI. Requesting the UE context may be requested through a Retrieve UE Context Request message. At this time, the DL TNL address received from the DU of the receiving NG-RAN in step S1600 is transmitted together to the CU-CP of the last serving NG-RAN.
- Step S1604: The CU-CP of the last serving NG-RAN checks whether to find and resume the UE context that was in the suspended state within the CU-CP of the last serving NG-RAN based on the I-RNTI, and/or whether the UE can be authenticated through an authentication token, etc. It also determines whether to deliver the UE context to the receiving NG-RAN.
- Step S1606: If the UE context can be found based on the I-RNTI in step S1604, through the bearer context modification procedure, the CU-CP of the last serving NG-RAN may inform the CU-UP of the last serving NG-RAN that the UE is still in the RRC_INACTIVE state, but the DL data currently being buffered will be delivered through the MT-SDT. In this case, the DL TNL address to the DU of the receiving NG-RAN received in step S1602 may be notified to the CU-UP of the last serving NG-RAN.
- Step S1608: When the CU-CP of the last serving NG-RAN decides to transmit DL data to the UE through MT-SDT while maintaining the UE context, the CU-CP of the last serving NG-RAN may respond to the CU-CP of the receiving NG-RAN through an SDT CONTEXT TRANSFER message. The SDT CONTEXT TRANSFER message may include a partial UE context to be used in MT-SDT (e.g., a bearer ID to be used for SDT, RLC bearer configuration to be used in the corresponding bearer, etc.).
- Step S1610: The CU-CP of the receiving NG-RAN requests the DU of the receiving NG-RAN to create a UE context based on the information received in step S1608. Requesting the UE context creation may be requested through a UE CONTEXT SETUP REQUEST message.
- Step S1612: The DU of the receiving NG-RAN responds to the CU-CP of the receiving NG-RAN through a UE CONTEXT SETUP RESPONSE message.
- Step S1614: The CU-UP of the last serving NG-RAN delivers the currently buffered DL data to the UE through the DU of the receiving NG-RAN. If the UE has UL data to be sent to 5GC, it may be transmitted to the 5GC through the DU of the receiving NG-RAN and the CU-UP of the last serving NG-RAN in this step.
- Step S1616: If the CU-CP of the last serving NG-RAN determines that there is no more data to be exchanged with the UE, the CU-CP of the last serving NG-RAN decides to transition the UE back to the RRC_INACTIVE state. Therefore, the CU-CP of the last serving NG-RAN generates an RRC release message including the Suspend Configuration to be used by the UE in the RRC_INACTIVE state and delivers it to the CU-CP of the receiving NG-RAN. The RRC release message including the Suspend Configuration may be delivered through a RETRIEVE UE CONTEXT FAILURE message. Through this, the CU-CP of the receiving NG-RAN may know that the MT-SDT for the corresponding UE is terminated.
- Step S1618: The CU-CP of the receiving NG-RAN transfers the RRC release message received in step S1616 to the DU of the receiving NG-RAN. The RRC release message may be delivered through a DL RRC MESSAGE TRANSFER message or a UE CONTEXT RELEASE COMMAND message.
- Step S1620: The DU of the receiving NG-RAN delivers the RRC release message received from the CU-CP of the receiving NG-RAN in step S1318 to the UE. Thereafter, the DU of the receiving NG-RAN releases the UE context and related resources for the corresponding UE.

When the RRC release message is received through the UE CONTEXT RELEASE COMMAND message in step S1618, the DU of the receiving NG-RAN responds to the CU-CP of the receiving NG-RAN with a UE CONTEXT RELEASE COMPLETE message.

The drawings according to the above-described implementations of the present disclosure may be performed individually or may be performed together with other drawings.

The present disclosure may have various advantageous effects.

For example, when DL data is received for the UE in the RRC_INACTIVE state, the CU-CP can determine whether to attempt MT-SDT while maintaining the RRC_INACTIVE state for the UE or to transition the UE to the RRC_CONNECTED state.

For example, when MT-SDT is applicable, it is possible to prevent the UE from receiving DL data after unnecessarily transitioning to the RRC_CONNECTED state.

For example, when the UE accesses through a new gNB, the new gNB can quickly create a DL data forwarding tunnel, so that the DL data is quickly delivered through the MT-SDT.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

Advantageous aspects of the present disclosure may be summarized as follows:
Aspect 1. A method performed by a receiving gNB adapted to operate in a wireless communication system, the method comprising:
   receiving a Radio Access Network (RAN) paging message from a last serving gNB, wherein the RAN paging message includes an MT-SDT indication informing that a Mobile Terminated (MT)-Small Data Transmission (SDT) is supported;
   transmitting a paging message to a User Equipment (UE);
   performing a random access procedure with the UE;
   receiving a Radio Resource Control (RRC) resume request message from the UE, wherein the RRC resume request message includes an Inactive Radio Network Temporary Identity (I-RNTI);
   transmitting a Retrieve UE Context Request message to the last serving gNB based on the I-RNTI, wherein the Retrieve UE Context Request message includes information about a Downlink (DL) Transport Network Layer (TNL) address associated with the MT-SDT;
   receiving DL data associated with the MT-SDT from the last serving gNB based on the DL TNL address; and
   transmitting the DL data to the UE.
Aspect 2. The method of aspect 1, wherein the receiving gNB includes a gNB Central Unit (gNB-CU) and a gNB Distributed Unit (gNB-DU), and
   wherein the gNB-CU includes a gNB-CU Control Plane (gNB-CU-CP) and a gNB-CU User Plane (gNB-CU-UP).
Aspect 3. The method of aspect 2, wherein the DL TNL address is allocated by the gNB-DU and transmitted to the gNB-CU-CP.
Aspect 4. The method of aspect 3, wherein the DL TNL address is transmitted to the gNB-CU-CP via an Initial UL RRC Message Transfer message, and
   wherein the Initial UL RRC Message Transfer message includes the RRC resume request message received from the UE.
Aspect 5. The method of aspect 3, wherein the Retrieve UE Context Request message including the DL TNL address is transmitted by the gNB-CU-CP to the last serving gNB.
Aspect 6. The method of aspect 2, wherein the RAN paging message including the MT-SDT indication is received by the gNB-CU-CP from the last serving gNB.
Aspect 7. The method of aspect 6, wherein the MT-SDT indication is transmitted from the gNB-CU-CP to the gNB-DU.
Aspect 8. The method of aspect 1, wherein the MT-SDT indication includes a bearer ID associated with the MT-SDT.
Aspect 9. A method performed by a User Equipment (UE) adapted to operate in a wireless communication system, the method comprising:
   receiving a Radio Resource Control (RRC) release message from a last serving gNB while in an RRC connected state with the last serving gNB, wherein the RRC release message includes a suspend configuration;
   transitioning to an RRC inactive state based on the suspend configuration;
   receiving a paging message from a receiving gNB, wherein the paging message is based on Mobile Terminated (MT)-Small Data Transmission (SDT);
   performing a random access procedure with the receiving gNB;
   transmitting an RRC resume request message to the receiving gNB, wherein the RRC resume request message includes an Inactive Radio Network Temporary Identity (I-RNTI); and
   receiving DL data associated with the MT-SDT from the receiving gNB.
Aspect 10. The method of aspect 9, wherein the method further comprises: after receiving the DL data associated with the MT-SDT, receiving a second RRC release message including a suspend configuration from the receiving gNB.
Aspect 11. The method of aspect 10, wherein, based on receiving the second RRC release message, the UE does not transition to the RRC connected state and remain in the RRC inactive state.
Aspect 12. The method of aspect 9, wherein the RRC resume request message includes at least one of an RRC resume cause, an authentication token, and/or information related to the MT-SDT.
Aspect 13. The method of aspect 9, wherein the method further comprises: after receiving the DL data associated with the MT-SDT, transmitting UL data to the receiving gNB.
Aspect 14. The method of aspect 9, wherein the UE communicates with at least one of a mobile device, a network and/or an autonomous vehicle other than the UE.
Aspect 15. A User Equipment (UE) adapted to operate in a wireless communication system, the UE comprising:
   at least one transceiver;
   at least one processor; and
   at least one memory operably connectable to the at least one processor and storing instructions that, based on being executed by the at least one processor, perform operations comprising:
      receiving a Radio Resource Control (RRC) release message from a last serving gNB while in an RRC connected state with the last serving gNB, wherein the RRC release message includes a suspend configuration;
      transitioning to an RRC inactive state based on the suspend configuration;
      receiving a paging message from a receiving gNB, wherein the paging message is based on Mobile Terminated (MT)-Small Data Transmission (SDT);
      performing a random access procedure with the receiving gNB;
      transmitting an RRC resume request message to the receiving gNB, wherein the RRC resume request message includes an Inactive Radio Network Temporary Identity (I-RNTI); and
      receiving DL data associated with the MT-SDT from the receiving gNB.

## Claims

1. A method comprising:
transmitting, by a Centralized Unit, CU,-Control Plane, CP, of a gNB, a bearer context modification request message including request information related to reporting of a Downlink (DL) data size to a CU-User Plane, UP, of the gNB;
receiving, by the CU-CP of the gNB, a DL data notification message including information related to the DL data size from the CU-CP of the gNB; and
transmitting, by the CU-CP of the gNB, a Radio Access Network, RAN, paging message including a Mobile Terminated, MT,-Small Data Transmission, SDT, indication to a receiving gNB.

2. The method of claim 1, wherein the gNB is a last serving gNB.

3. The method of claim 1, wherein the bearer context modification request message includes a data size threshold.

4. The method of claim 3, wherein the DL data notification message includes a result of comparison between the DL data size and the data size threshold.

5. The method of claim 1, wherein the method further comprises:
transmitting, by the CU-CP of the gNB, a paging message including the MT-SDT indication to a Distributed Unit, DU, of the gNB.

6. The method of claim 1, wherein the method further comprises:
receiving, by the CU-CP of the gNB, a retrieve user equipment, UE, context request message including information related to a DL Transport Network Layer, TNL, address associated with an MT-SDT from the receiving gNB; and
transmitting, by the gNB, DL data associated with the MT-SDT to the receiving gNB based on the DL TNL address.

7. The method of claim 1, wherein the MT-SDT indication informs that an MT- SDT is supported.

8. The method of claim 1, wherein the MT-SDT indication includes a bearer ID associated with an MT-SDT.

9. A Centralized Unit, CU,-Control Plane, CP, of a gNB comprising:
at least one transceiver;
at least one processor; and
at least one memory operably connectable to the at least one processor and storing instructions that, based on being executed by the at least one processor, perform the method of claims 1 to 8.
